# EUROPEAN PATENT APPLICATION

(11) **EP 4 848 854 A1**
(43) Date of publication of application: **02.12.2026**
(21) Application number: 25751065.1
(22) Date of filing: 10.01.2025
(51) Int. Cl.: H04W 72/0446

(54) **COMMUNICATION METHOD AND COMMUNICATION APPARATUS**

(30) Priority: 07.02.2024 CN 202410175896
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN)
(74) Representative: Huawei European IPR
(86) International application number: PCT/CN2025/071751
(87) International publication number: WO 2025/167463

(57) **Abstract**

This application provides a communication method and a communication apparatus. The method includes: respectively transmitting first data on at least one first segment of a time domain resource, where the first data includes data obtained by performing orthogonal cover code OCC encoding; and respectively transmitting second data on a partial resource of at least one second segment of the time domain resource, where the partial resource of the second segment does not overlap with the first segment, the partial resource of the second segment does not include a first interval respectively located at a head and/or a tail of the second segment, and the first interval is a maximum interval among intervals between adjacent segments respectively corresponding to at least one terminal device. In this method, system capacity in a segmentation scenario is increased in a multi-user multiplexing manner.

## Description

This application claims priority to Chinese Patent Application No. 202410175896.0, filed with the China National Intellectual Property Administration on February 7, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A non-terrestrial communication network, for example, satellite communication, has significant advantages such as global coverage, long-distance transmission, flexible networking, convenient deployment, and free from geographical restrictions, and has been widely applied to a plurality of fields such as maritime communication, positioning and navigation, disaster relief, scientific experiments, video broadcasting, and earth observation.

In a non-terrestrial network (non-terrestrial network, NTN), because a base station is not stationary, a severe time deviation problem exists between a terminal device and the base station. To meet uplink synchronization, the terminal device needs to perform timing advance adjustment from time to time. During timing advance adjustment, if a transport block is repeatedly transmitted for a large number of times, the transmission duration of the transport block is very long. Therefore, timing advance adjustment needs to be performed after a time domain resource is segmented.

In a solution of a related segmentation scenario, data of a single user is transmitted in different segments. In this way, a quantity of accessed terminal devices is small, thereby degrading system capacity.

### SUMMARY

This application provides a communication method and a communication apparatus, to increase system capacity in a segmentation scenario in a multi-user multiplexing manner.

According to a first aspect, a communication method is provided. The method may be performed by a terminal device. The terminal device herein may be the terminal device itself, or may be a processor, a module, a chip, a chip system, or the like that is in the terminal device and that implements the method. This is not limited in this application. The method includes: respectively transmitting first data on at least one first segment of a time domain resource, where the first data includes data obtained by performing orthogonal cover code OCC encoding; and respectively transmitting second data on a partial resource of at least one second segment of the time domain resource, where the partial resource of the second segment does not overlap with the first segment, the partial resource of the second segment does not include a first interval respectively located at a head and/or a tail of the second segment, and the first interval is a maximum interval among intervals between adjacent segments respectively corresponding to at least one terminal device.

The foregoing OCC encoding is a resource multiplexing manner. Resource multiplexing indicates that a plurality of terminal devices may upload data on a same resource, and data of each terminal device is multiplied by an orthogonal OCC sequence. Because the OCC sequence is usually an orthogonal sequence, it can be ensured that the data of the plurality of terminal devices is transmitted on the same resource, without interfering with each other.

A length of the first segment, a length of the second segment, and a length of the first interval may be pre-configured by a network device for a first terminal device, or may be configured by the network device for the first terminal device by using indication information. This is not specifically limited in this embodiment of this application.

It should be understood that the interval is a length that needs to be punctured on the second segment, that is, a length of data that needs to be discarded on the second segment.

The first interval is set to the maximum interval among the intervals between the adjacent segments respectively corresponding to terminal devices for resource multiplexing. In this way, a terminal device with a small interval may perform data transmission with reference to a puncturing manner of a terminal device with a large interval, so that terminal devices with different segment intervals can also multiplex a resource, thereby avoiding a case in which only terminal devices with a same segment interval can multiplex a resource.

In the foregoing technical solution, in a segmentation scenario, a quantity of accessed terminal devices is increased in a multi-user resource multiplexing manner, to increase system capacity in the segmentation scenario.

With reference to the first aspect, in some implementations of the first aspect, the method further includes: receiving first indication information, where the first indication information indicates a type of the partial resource of the second segment.

With reference to the first aspect, in some implementations of the first aspect, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

With reference to the first aspect, in some implementations of the first aspect, the partial resource of the second segment does not include the first interval located at the head of the second segment, the at least one first segment is a 1^{st} segment of the time domain resource, and the at least one second segment is at least one segment after the 1^{st} segment.

With reference to the first aspect, in some implementations of the first aspect, the partial resource of the second segment does not include the first interval located at the tail of the second segment, the at least one first segment is a last segment of the time domain resource, and the at least one second segment is at least one segment before the last segment.

With reference to the first aspect, in some implementations of the first aspect, the first interval includes at least two slots, and when a quantity of repetitions of data is less than a first threshold, the partial resource of the second segment does not include the first interval located at the head or the tail of the second segment.

In the foregoing technical solution, when the first interval is large and the quantity of repetitions of the data is small, to avoid a performance loss caused by a loss of excessive data, only data at the first interval at the head of the second segment may be discarded, or data at the first interval at the tail of the second segment may be discarded.

With reference to the first aspect, in some implementations of the first aspect, the first interval includes at least two slots, and when a quantity of repetitions of data is greater than a first threshold, the partial resource of the second segment does not include the first interval respectively located at the head and the tail of the second segment.

In the foregoing technical solution, when the first interval is large and the quantity of repetitions of the data is large, because the quantity of repetitions of the data is large, even if the data at the first intervals at the head and the tail of the second segment is discarded, performance is not affected.

With reference to the first aspect, in some implementations of the first aspect, the method further includes: receiving second indication information, where the second indication information indicates a type of OCC encoding of the second data.

With reference to the first aspect, in some implementations of the first aspect, the second data includes data obtained by performing OCC encoding.

With reference to the first aspect, in some implementations of the first aspect, the second data is part of third data to be transmitted on the partial resource of the second segment, and the third data is data obtained by performing OCC encoding on data to be transmitted on the second segment.

In the foregoing technical solution, OCC encoding may be first performed on the data to be transmitted on the second segment to obtain the third data, and the second data transmitted on the partial resource of the second segment is the part of the third data to be transmitted on the partial resource of the second segment. In this way, multi-user multiplexing is performed on a resource of each segment as much as possible, thereby further increasing system capacity.

With reference to the first aspect, in some implementations of the first aspect, the second data includes data obtained by performing OCC encoding on all or part of data to be transmitted on the partial resource of the second segment.

According to a second aspect, a communication method is provided. The method may be performed by a network device. The network device herein may be the network device itself, or may be a processor, a module, a chip, a chip system, or the like that is in the network device and that implements the method. This is not limited in this application. The method includes: receiving p pieces of first data, where the p pieces of first data are data respectively transmitted by p terminal devices on at least one first segment of a time domain resource, and each piece of first data includes data obtained by performing OCC encoding; and receiving second data, where the second data is data transmitted by at least one terminal device on a partial resource of at least one second segment of the time domain resource, the partial resource of the second segment does not overlap with the first segment, the partial resource of the second segment does not include a first interval respectively located at a head and/or a tail of the second segment, and the first interval is a maximum interval among intervals between adjacent segments respectively corresponding to the at least one terminal device.

With reference to the second aspect, in some implementations of the second aspect, the method further includes: respectively performing OCC decoding on the p pieces of first data based on p orthogonal cover code OCC sequences, to obtain the data respectively transmitted by the p terminal devices on the at least one first segment; and determining, based on a type of OCC encoding of the second data, whether to perform OCC decoding on the second data.

With reference to the second aspect, in some implementations of the second aspect, the method further includes: sending first indication information to the at least one terminal device, where the first indication information indicates a type of the partial resource of the second segment.

With reference to the second aspect, in some implementations of the second aspect, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

With reference to the second aspect, in some implementations of the second aspect, the partial resource of the second segment does not include the first interval located at the head of the second segment, the at least one first segment is a 1^{st} segment of the time domain resource, and the at least one second segment is at least one segment after the 1^{st} segment.

With reference to the second aspect, in some implementations of the second aspect, the partial resource of the second segment does not include the first interval located at the tail of the second segment, the at least one first segment is a last segment of the time domain resource, and the at least one second segment is at least one segment before the last segment.

With reference to the second aspect, in some implementations of the second aspect, the method further includes: sending second indication information to the at least one terminal device, where the second indication information indicates the type of OCC encoding of the second data.

With reference to the second aspect, in some implementations of the second aspect, the second data includes data obtained by performing OCC encoding.

With reference to the second aspect, in some implementations of the second aspect, the second data is part of third data to be transmitted on the partial resource of the second segment, and the third data is data obtained by performing OCC encoding on data to be transmitted on the second segment.

With reference to the second aspect, in some implementations of the second aspect, the second data includes data obtained by performing OCC encoding on all or part of data to be transmitted on the partial resource of the second segment.

With reference to the second aspect, in some implementations of the second aspect, OCC decoding is performed on the second data based on an OCC sequence, to obtain the data respectively transmitted by the at least one terminal device on the at least one second segment.

It should be understood that, for beneficial effects of the second aspect and the aspects, refer to the beneficial effects of the first aspect and the aspects. Details are not described herein again.

According to a third aspect, a communication apparatus is provided. The apparatus includes a transceiver unit. The transceiver unit is configured to respectively transmit first data on at least one first segment of a time domain resource; and the transceiver unit is further configured to respectively transmit second data on a partial resource of at least one second segment of the time domain resource.

The first data includes data obtained by performing orthogonal cover code OCC encoding; and the partial resource of the second segment does not overlap with the first segment, the partial resource of the second segment does not include a first interval respectively located at a head and/or a tail of the second segment, and the first interval is a maximum interval among intervals between adjacent segments respectively corresponding to at least one terminal device.

With reference to the third aspect, in some implementations of the third aspect, the transceiver unit is further configured to receive first indication information, where the first indication information indicates a type of the partial resource of the second segment.

With reference to the third aspect, in some implementations of the third aspect, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

With reference to the third aspect, in some implementations of the third aspect, the partial resource of the second segment does not include the first interval located at the head of the second segment, the at least one first segment is a 1^{st} segment of the time domain resource, and the at least one second segment is at least one segment after the 1^{st} segment.

With reference to the third aspect, in some implementations of the third aspect, the partial resource of the second segment does not include the first interval located at the tail of the second segment, the at least one first segment is a last segment of the time domain resource, and the at least one second segment is at least one segment before the last segment.

With reference to the third aspect, in some implementations of the third aspect, the first interval includes at least two slots, and when a quantity of repetitions of data is less than a first threshold, the partial resource of the second segment does not include the first interval located at the head or the tail of the second segment.

With reference to the third aspect, in some implementations of the third aspect, the first interval includes at least two slots, and when a quantity of repetitions of data is greater than a first threshold, the partial resource of the second segment does not include the first interval respectively located at the head and the tail of the second segment.

With reference to the third aspect, in some implementations of the third aspect, the transceiver unit is further configured to receive second indication information, where the second indication information indicates a type of OCC encoding of the second data.

With reference to the third aspect, in some implementations of the third aspect, the second data includes data obtained by performing OCC encoding.

With reference to the third aspect, in some implementations of the third aspect, the second data is part of third data to be transmitted on the partial resource of the second segment, and the third data is data obtained by performing OCC encoding on data to be transmitted on the second segment.

With reference to the third aspect, in some implementations of the third aspect, the communication apparatus includes a processing unit, and the processing unit is configured to perform OCC encoding on the data to be transmitted on the second segment to obtain the third data.

With reference to the third aspect, in some implementations of the third aspect, the second data includes data obtained by performing OCC encoding on all or part of data to be transmitted on the partial resource of the second segment.

With reference to the third aspect, in some implementations of the third aspect, the processing unit is further configured to perform OCC encoding on the part or all of the data to be transmitted on the second segment to obtain the second data.

It should be understood that, the third aspect is an implementation on an apparatus side corresponding to the first aspect, and explanations and descriptions of beneficial effects of the first aspect are also applicable to the third aspect. Details are not described again.

According to a fourth aspect, a communication apparatus is provided. The apparatus includes a transceiver unit. The transceiver unit is configured to receive p pieces of first data; and the transceiver unit is further configured to receive second data. The p pieces of first data are data respectively transmitted by p terminal devices on at least one first segment of a time domain resource, and each piece of first data includes data obtained by performing OCC encoding; and the second data is data transmitted by at least one terminal device on a partial resource of at least one second segment of the time domain resource, the partial resource of the second segment does not overlap with the first segment, the partial resource of the second segment does not include a first interval respectively located at a head and/or a tail of the second segment, and the first interval is a maximum interval among intervals between adjacent segments respectively corresponding to the at least one terminal device.

With reference to the fourth aspect, in some implementations of the fourth aspect, the apparatus further includes a processing unit, and the processing unit is configured to respectively perform OCC decoding on the p pieces of first data based on p orthogonal cover code OCC sequences, to obtain the data respectively transmitted by the p terminal devices on the at least one first segment.

With reference to the fourth aspect, in some implementations of the fourth aspect, the processing unit is further configured to determine, based on a type of OCC encoding of the second data, whether to perform OCC decoding on the second data.

With reference to the fourth aspect, in some implementations of the fourth aspect, the transceiver unit is further configured to send first indication information to the at least one terminal device, where the first indication information indicates a type of the partial resource of the second segment.

With reference to the fourth aspect, in some implementations of the fourth aspect, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

With reference to the fourth aspect, in some implementations of the fourth aspect, the partial resource of the second segment does not include the first interval located at the head of the second segment, the at least one first segment is a 1^{st} segment of the time domain resource, and the at least one second segment is at least one segment after the 1^{st} segment.

With reference to the fourth aspect, in some implementations of the fourth aspect, the partial resource of the second segment does not include the first interval located at the tail of the second segment, the at least one first segment is a last segment of the time domain resource, and the at least one second segment is at least one segment before the last segment.

With reference to the fourth aspect, in some implementations of the fourth aspect, the transceiver unit is further configured to send second indication information to the at least one terminal device, where the second indication information indicates the type of OCC encoding of the second data.

With reference to the fourth aspect, in some implementations of the fourth aspect, the second data includes data obtained by performing OCC encoding.

With reference to the fourth aspect, in some implementations of the fourth aspect, the second data is part of third data to be transmitted on the partial resource of the second segment, and the third data is data obtained by performing OCC encoding on data to be transmitted on the second segment.

With reference to the fourth aspect, in some implementations of the fourth aspect, the second data includes data obtained by performing OCC encoding on all or part of data to be transmitted on the partial resource of the second segment.

With reference to the fourth aspect, in some implementations of the fourth aspect, the processing unit is further configured to perform OCC decoding on the second data based on an OCC sequence, to obtain data respectively transmitted by the at least one terminal device on the at least one second segment.

It should be understood that, the fourth aspect is an implementation on an apparatus side corresponding to the second aspect, and explanations and descriptions of beneficial effects of the second aspect are also applicable to the fourth aspect. Details are not described again.

According to a fifth aspect, this application provides a communication apparatus. The communication apparatus includes a processor, configured to implement the method in any implementation of the first aspect or the method in any implementation of the second aspect. The processor is coupled to a memory, the memory is configured to store instructions and data, and when executing the instructions stored in the memory, the processor may implement the method in any implementation of the first aspect or the method in any implementation of the second aspect.

Optionally, the communication apparatus may further include the memory. Optionally, the memory may be coupled to the processor. Optionally, the communication apparatus may further include a communication interface. The communication interface is used by the apparatus to communicate with another device. For example, the communication interface may be a transceiver, a hardware circuit, a bus, a module, a pin, or another type of communication interface.

In an example, the communication apparatus may be a network device, for example, an access network device, may be an apparatus, a module, a chip, or the like disposed in the network device, or may be an apparatus that can be used in cooperation with the network device.

In another example, the communication apparatus may be a terminal device, may be an apparatus, a module, a chip, or the like disposed in the terminal device, or may be an apparatus that can be used in cooperation with the terminal device.

According to a sixth aspect, this application provides a communication system, including a terminal device and a network device. The terminal device is the terminal device according to any one of the first aspect or the implementations of the first aspect, and the network device is the network device according to any one of the second aspect or the implementations of the second aspect.

According to a seventh aspect, this application further provides a computer program. When the computer program is run on a computer, the computer is caused to perform the method according to any one of the first aspect and the second aspect or the implementations of the first aspect and the second aspect.

According to an eighth aspect, this application further provides a computer program product, including instructions. When the instructions are run on a computer, the computer is caused to perform the method according to any one of the first aspect and the second aspect or the implementations of the first aspect and the second aspect.

According to a ninth aspect, this application further provides a computer-readable storage medium. The computer-readable storage medium stores a computer program or instructions. When the computer program or the instructions are run on a computer, the computer is caused to perform the method according to any one of the first aspect and the second aspect or the implementations of the first aspect and the second aspect.

According to a tenth aspect, this application further provides a chip. The chip is configured to read a computer program stored in a memory, to perform the method according to any one of the first aspect and the second aspect or the implementations of the first aspect and the second aspect.

According to an eleventh aspect, this application further provides a chip system. The chip system includes a processor, configured to support an apparatus in implementing the method according to any one of the first aspect and the second aspect or the implementations of the first aspect and the second aspect. In a possible design, the chip system further includes a memory, and the memory is configured to store a program and data that are necessary for the apparatus. The chip system may include a chip, or may include a chip and another discrete component.

### BRIEF DESCRIPTION OF DRAWINGS

FIG. 1 is a diagram of a communication system 100 to which an embodiment of this application is applicable;
FIG. 2 is a diagram of a segmentation scenario according to an embodiment of this application;
FIG. 3 is a schematic flowchart of a communication method according to an embodiment of this application;
FIG. 4 is a diagram of multiplexing a resource of a first segment by a plurality of terminal devices according to an embodiment of this application;
FIG. 5 is a diagram of a partial resource of a first segment and a partial resource of a second segment according to an embodiment of this application;
FIG. 6 is another diagram of a partial resource of a first segment and a partial resource of a second segment according to an embodiment of this application;
FIG. 7 is another diagram of a partial resource of a first segment and a partial resource of a second segment according to an embodiment of this application;
FIG. 8 is another diagram of a partial resource of a first segment and a partial resource of a second segment according to an embodiment of this application;
FIG. 9 is a diagram of an OCC encoding scheme of second data transmitted on a partial resource of a second segment according to an embodiment of this application;
FIG. 10 is a diagram of another OCC encoding scheme of second data transmitted on a partial resource of a second segment according to an embodiment of this application;
FIG. 11 is a diagram of another OCC encoding scheme of second data transmitted on a partial resource of a second segment according to an embodiment of this application;
FIG. 12 is a diagram of a structure of a communication apparatus 1200 according to an embodiment of this application; and
FIG. 13 is a diagram of a structure of a communication apparatus 1300 according to an embodiment of this application.

### DESCRIPTION OF EMBODIMENTS

The following describes technical solutions of this application with reference to accompanying drawings.

The technical solutions of this application may be applied to a non-terrestrial network (non-terrestrial network, NTN) system like a satellite communication system, a high altitude platform station (high altitude platform station, HAPS) communication system, or an uncrewed aerial vehicle, for example, an integrated communication and navigation (integrated communication and navigation, IcaN) system, a global navigation satellite system (global navigation satellite system, GNSS), and an ultra-dense low-orbit satellite communication system.

The satellite communication system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a future mobile communication system, and the like.

The satellite communication system includes user equipment (UE) and a network device. The user equipment may also be referred to as a user terminal, a mobile station, or the like. The network device may include one or more satellites and one or more terrestrial station devices. The terrestrial station device may also be referred to as a core network device. The satellite may be a low earth orbit (low earth orbit, LEO) satellite, a non-geostationary earth orbit (non-geostationary earth orbit, NGEO) satellite, or the like. The satellite may provide a communication service, a navigation service, a positioning service, and the like for a terminal device by using a plurality of beams. The satellite uses the plurality of beams to cover a service area, and different beams may be used to perform communication in one or more manners of time division, frequency division, and space division. The satellite performs wireless communication with the terminal device by broadcasting a communication signal, a navigation signal, and the like. The satellite may perform wireless communication with the terrestrial station device. The satellite mentioned in embodiments of this application may be a satellite base station, may include an orbit receiver or a repeater configured to relay information, or may be a network side device mounted on a satellite.

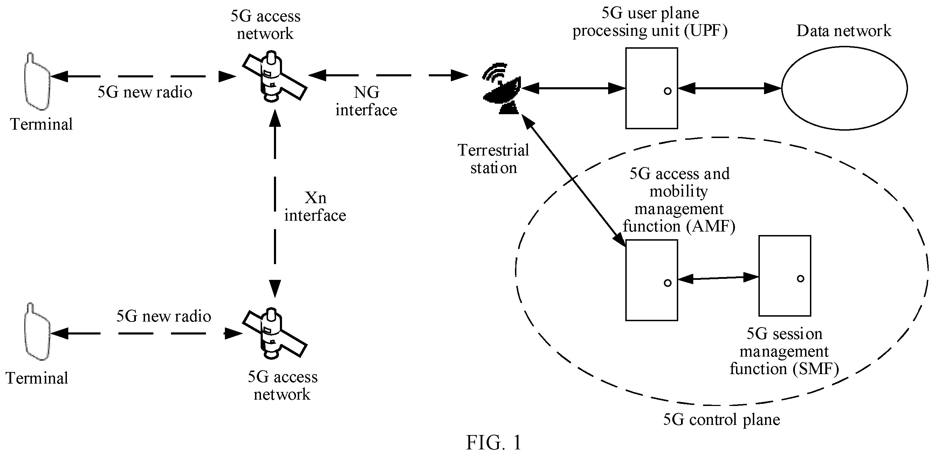

FIG. 1 is a diagram of a communication system 100 to which an embodiment of this application is applicable. As shown in FIG. 1, a satellite provides a communication service for a terminal device by using a plurality of beams. The satellite in this scenario is a non-geostationary earth orbit (non-geostationary earth orbit, NGEO) satellite, and the satellite is connected to a core network device. The satellite uses the plurality of beams to cover a service area, and different beams may be used to perform communication in one or more manners of time division, frequency division, and space division. The satellite provides communication and navigation services for the terminal device by broadcasting a communication signal and a navigation signal. The satellite mentioned in embodiments of this application may alternatively be a satellite base station or a network side device mounted on a satellite.

The satellite communication system includes a transparent satellite architecture and a non-transparent satellite architecture. Transparent transmission is also referred to as bent-pipe forwarding transmission, that is, only processes such as frequency conversion and signal amplification are performed on a signal on the satellite, and the satellite is transparent for the signal and seems like nonexistent. Non-transparent transmission is also referred to as regenerative (on-satellite access/processing) transmission, that is, the satellite has all or part of functions of a base station.

The terminal device mentioned in embodiments of this application includes various handheld devices, vehicle-mounted devices, wearable devices, or compute devices that have a wireless communication function, or other processing devices connected to a wireless modem, and may be specifically user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

A terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears a data service, and the like. The CN may further include network elements such as an access and mobility management function (Access and Mobility Management Function, AMF) network element, a session management function (Session Management Function, SMF) network element, an authentication server function (Authentication Server Function, AUSF) network element, a policy control function (Policy control Function, PCF) node, and a user plane function (User Plane Function, UPF) network element. The AMF network element is configured to manage access and mobility of the UE, and is mainly responsible for functions such as UE authentication, UE mobility management, and UE paging.

The network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one or one group (including a plurality of antenna panels) of antenna panels of a base station in a 5G system. In addition, the network device may alternatively be a network node that forms a gNB or a TP, for example, a BBU, a distributed unit (distributed unit, DU), or the like. Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

A terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. The network elements in FIG. 1 and interfaces of the network elements are described as follows.

Terminal device: is a mobile device that supports 5G new radio, for example, a typical mobile device like a mobile phone or a pad. The terminal device may access a satellite network through an air interface and initiate a service like a call or network access.

5G access network device: mainly provides a radio access service, schedules a radio resource for an access terminal, provides a reliable wireless transmission protocol, a reliable data encryption protocol, and the like, and is, for example, a base station.

5G core network: provides services such as user access control, mobility management, session management, user security authentication, and charging. The 5G core network includes a plurality of functional units, and may be classified into a control-plane functional entity and a data-plane functional entity. An access and mobility management unit (access and mobility management function, AMF) is responsible for user access management, security authentication, and mobility management. A user plane function (user plane function, UPF) is responsible for functions such as managing user plane data transmission and traffic statistics collection.

Terrestrial station: is responsible for forwarding signaling and service data between a satellite access network device and the 5G core network.

5G new radio: is a radio link between the terminal and the access network device.

Xn interface: is an interface between the 5G access network device and the access network device, and is mainly for signaling exchange such as handover.

NG interface: is an interface between the 5G access network device and the 5G core network, and is mainly for exchanging signaling such as NAS of the core network and service data of users.

An application architecture in embodiments of this application may include a non-terrestrial network (non-terrestrial network, NTN). The non-terrestrial network includes nodes such as a satellite network, a high-altitude platform, and an uncrewed aerial vehicle, has significant advantages such as global coverage, long-distance transmission, flexible networking, convenient deployment, and free from geographical restrictions, and has been widely applied to a plurality of fields such as maritime communication, positioning and navigation, disaster relief, scientific experiments, video broadcasting, and earth observation. The 5G terrestrial network and the satellite network are integrated to form a global seamless integrated communication network that covers the sea, land, air, space, and ground. This network meets requirements of ubiquitous services of users and is an important direction of future communication development.

In the NTN system, convergence of a satellite and 5G gives full play to respective advantages to provide more comprehensive and higher-quality services for users. Main features are as follows: (1) In remote areas, aircraft, or ocean ships that cannot be covered by a 5G terrestrial network, the satellite can provide economical and reliable network services, to extend the network to a place that cannot be reached by the terrestrial network. (2) The satellite can provide a continuous network connection service for users on an internet of things device and mobile carriers such as an airplane, a ship, a train, and a car. Convergence of the satellite and 5G can greatly enhance a service capability of a 5G system in this aspect. (3) The satellite has an excellent broadcast/multicast capability to provide an efficient data distribution service for a network edge and a user terminal. Compared with an early satellite mobile communication system, development of current satellite mobile communication has two characteristics: miniaturization of mobile terminals, where a plurality of mobile communication terminals including handsets are supported; and broadbandization of communication services, where in addition to a conventional narrowband voice service, a high-speed data service and an internet multimedia communication service are further provided.

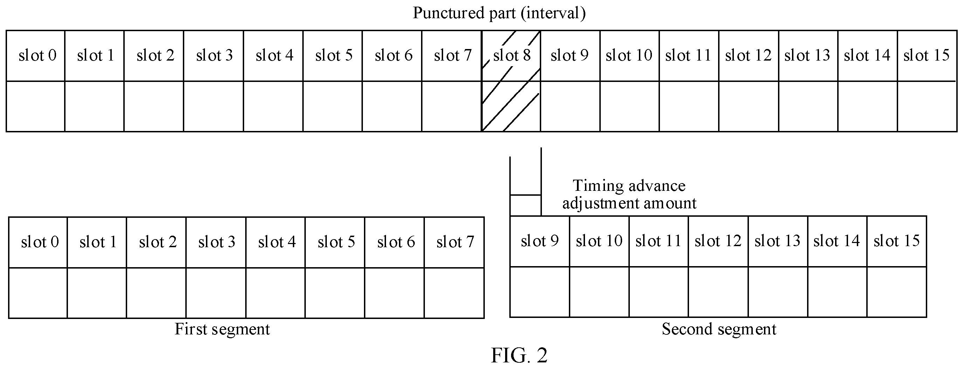

In existing terrestrial communication, it is assumed that both a terminal device and a base station are stationary. Therefore, long-time data transmission does not generate a large timing drift. However, in satellite communication, because the base station is not stationary, a severe time deviation problem exists between the terminal device and the base station. To meet uplink synchronization, the terminal needs to perform timing advance adjustment from time to time. During timing advance adjustment, if a transport block is repeatedly transmitted for a large number of times, the transmission duration of the transport block is very long. Therefore, timing advance adjustment needs to be performed after a time domain resource is segmented. Timing advance adjustment affects a relationship between segments. For example, as shown in FIG. 2, if a timing advance amount is increased for a next segment (for example, a second segment), the next segment overlaps with a tail of a previous segment (for example, a first segment). Therefore, during actual transmission, the tail of the previous segment (for example, the first segment) or a front part of the next segment (for example, the second segment) is discarded, to ensure that data at the tail of the previous segment (for example, the first segment) and data at a head of the next segment (for example, the second segment) do not overlap.

The base station configures a segment length and an interval between segments for the terminal device. The segment length may include but is not limited to: 2 ms, 4 ms, 8 ms, 16 ms, 32 ms, 64 ms, 128 ms, 256 ms, and the like, and a length of the interval between segments may include but is not limited to: one symbol, one slot, two slots, and the like. For ease of description, in FIG. 2, an example in which a segment length is 4 ms (eight slots) and an interval between segments is one slot is used for description.

Data at the interval between segments may be discarded, which is generally referred to as puncturing. For example, as shown in FIG. 2, the punctured part is located in a 1^{st} slot (slot 8) of the second segment. Therefore, data transmitted on the 1^{st} slot (slot 8) of the second segment may be discarded.

In a solution of a related segmentation scenario, data of a single user is transmitted in different segments. In this way, a quantity of accessed terminal devices is small, leading to low system capacity.

In view of this, an embodiment of this application provides a communication method. In the method, system capacity in a segmentation scenario is increased in a multi-user multiplexing manner.

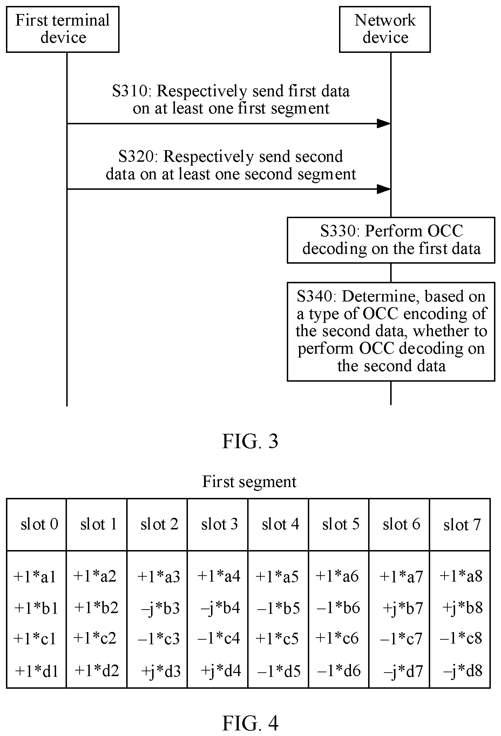

The following describes in detail the communication method provided in this embodiment of this application with reference to FIG. 3.

For ease of understanding of embodiments of this application, the following descriptions are provided.

First, in this application, unless otherwise stated or if there is a logic conflict, terms and/or descriptions in different embodiments are consistent and may be mutually referenced, and technical features in different embodiments may be combined into a new embodiment based on an internal logical relationship thereof.

Second, in this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, and c may indicate a, b, c, a and b, a and c, b and c, or a, b, and c. Each of a, b, and c may be singular or plural.

Third, in this application, "first", "second", and various numerical numbers (for example, #1 and #2) indicate differentiation for ease of description, and are not intended to limit the scope of embodiments of this application, for example, are used to distinguish between different messages but not to describe a specific order or sequence. It should be understood that objects described in such a way may be interchanged in an appropriate circumstance, so that a solution other than embodiments of this application can be described.

Fourth, in this application, the terms "include" and "have" and any other variants thereof are intended to cover non-exclusive inclusion. For example, a process, a method, a system, a product, or a device that includes a series of steps or units is not necessarily limited to those steps or units that are clearly listed, but may include other steps or units that are not clearly listed or inherent to the process, the method, the product, or the device.

Fifth, in this application, "indicate" may include directly indicating and indirectly indicating. When a piece of indication information is described as indicating A, the indication information may directly indicate A or indirectly indicate A, but it does not indicate that the indication information definitely carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol used in a future communication system. This is not limited in this application. "Pre-defined" may include defined in advance, for example, defined in a protocol. "Pre-configured" may be implemented by pre-storing corresponding code or a corresponding table in a device, or may be implemented in another manner that may indicate related information. A specific implementation thereof is not limited in this application.

Seventh, in this application, "storage" may mean storage in one or more memories. The one or more memories may be separately disposed, or may be integrated into an encoder, a decoder, a processor, or a communication apparatus. Alternatively, a part of the one or more memories may be separately disposed, and a part the one or more memories may be integrated into a decoder, a processor, or a communication apparatus. A type of the memory may be a storage medium in any form. This is not limited in this application.

Eighth, in this application, if there is no logic conflict, "reporting", "feeding back", and "sending" may be interchanged.

FIG. 3 is a schematic flowchart of a communication method according to an embodiment of this application. As shown in FIG. 3, the method may include steps 310 to 340. The following describes steps 310 to 340 in detail.

Step 310: A first terminal device respectively sends first data to a network device on at least one first segment of a time domain resource.

It should be understood that the first terminal device herein may be the first terminal device itself, or may be a processor, a module, a chip, a chip system, or the like that is in the first terminal device and that implements the method. This is not limited in this application.

In this embodiment of this application, the first data respectively transmitted by the first terminal device on the at least one first segment of the time domain resource may be obtained by performing orthogonal cover code (orthogonal coverage code, OCC) encoding. For example, the first data may be obtained by performing encoding on data based on an OCC sequence.

For example, a length of the first segment may include but is not limited to: 2 ms, 4 ms, 8 ms, 16 ms, 32 ms, 64 ms, 128 ms, 256 ms, and the like.

The length of the first segment may be pre-configured by the network device for the first terminal device, or may be configured by the network device for the first terminal device by using indication information. This is not specifically limited in this embodiment of this application.

It should be understood that the foregoing OCC encoding is a resource multiplexing manner. Resource multiplexing indicates that a plurality of terminal devices may upload data on a same resource, and data of each terminal device is multiplied by an orthogonal OCC sequence. Because the OCC sequence is usually an orthogonal sequence, it can be ensured that the data of the plurality of terminal devices is transmitted on the same resource, without interfering with each other.

For example, an OCC sequence whose length is 4 in Table 1 is used as an example for description. Data of four terminal devices (the first terminal device, a second terminal device, a third terminal device, and a fourth terminal device) may be transmitted on the first segment in a superposition manner.

**Table 1 OCC sequence whose length is 4**

| n | Wn |
|---|---|
| 0 | [+1, +1, +1, +1] |
| 1 | [+1, -j, -1, +j] |
| 2 | [+1, -1, +1, -1] |
| 3 | [+1, +j, -1, -j] |

The following uses an example in which the first segment in FIG. 4 includes eight slots (a slot 0 to a slot 7) to describe data transmitted by the four terminal devices (the first terminal device, the second terminal device, the third terminal device, and the fourth terminal device) by multiplexing a resource of the first segment.

In an example, assuming that the first terminal device uses the OCC sequence with n=0, data 1 to be transmitted by the first terminal device on the eight slots of the first segment is {a1, a2, a3, a4, a5, a6, a7, a8}, data 2 obtained by the first terminal device by performing OCC encoding on the data 1 by using the OCC sequence with n=0 is {+1*(a1, a2), +1*(a3, a4), +1*(a5, a6), +1*(a7, a8)}, and the data 2 is then transmitted on the eight slots of the first segment.

In another example, assuming that the second terminal device uses the OCC sequence with n=1, data 3 to be transmitted by the second terminal device on the eight slots of the first segment is {b1, b2, b1, b2, b5, b6, b7, b8}, data 4 obtained by the second terminal device by performing OCC encoding on the data 3 by using the OCC sequence with n=1 is {+1*(b1, b2), - j*(b3, b4), -1*(b5, b6), +j*(b7, b8)}, and the data 4 is then transmitted on the eight slots of the first segment.

In another example, assuming that the third terminal device uses the OCC sequence with n=2, data 5 to be transmitted by the third terminal device on the eight slots of the first segment is {c1, c2, c3, c4, c5, c6, c7, c8}, data 6 obtained by the third terminal device by performing OCC encoding on the data 5 by using the OCC sequence with n=2 is {+1*(c1, c2), -1*(c3, c4), +1*(c5, c6), -1*(c7, c8)}, and the data 6 is then transmitted on the eight slots of the first segment.

In another example, assuming that the fourth terminal device uses the OCC sequence with n=3, data 7 to be transmitted by the fourth terminal device on the eight slots of the first segment is {d1, d2, d3, d4, d5, d6, d7, d8}, data 8 obtained by the fourth terminal device by performing OCC encoding on the data 7 by using the OCC sequence with n=3 is {+1*(d1, d2), +j*(d3, d4), -1*(d5, d6), -j*(d7, d8)}, and the data 8 is then transmitted on the eight slots of the first segment.

Refer to FIG. 4. Data transmitted on the slot 0 of the first segment includes: +1*a1, +1*b1, +1*c1, and +1*d1; data transmitted on the slot 1 includes: +1*a2, +1*b2, +1*c2, and +1*d2; data transmitted on the slot 2 includes: +1*a3, -j*b3, -1*c3, and +j*d3; data transmitted on the slot 3 includes: +1*a4, -j*b4, -1*c4, and +j*d4; data transmitted on the slot 4 includes: +1*a5, - 1*b5, +1*c5, and -1*d5; data transmitted on the slot 5 includes: +1*a6, -1*b6, +1*c6, and -1*d6; data transmitted on the slot 6 includes: +1*a7, +j*b7, -1*c7, and -j*d7; and data transmitted on the slot 7 includes: +1*a8, +j*b8, -1*c8, and -j*d8.

It should be noted that the eight slots in FIG. 4 include four time units (or referred to as resource units). To be specific, the slot 0 and the slot 1 are one time unit, the slot 2 and the slot 3 are one time unit, the slot 4 and the slot 5 are one time unit, and the slot 6 and the slot 7 are one time unit.

Step 320: The first terminal device respectively sends second data to the network device on a partial resource of at least one second segment of the time domain resource.

In this embodiment of this application, the first terminal device may respectively transmit the second data on the partial resource of the at least one second segment of the time domain resource, and the partial resource of the second segment does not include a first interval respectively located at a head and/or a tail of the second segment.

It should be understood that in this embodiment of this application, adjacent segments do not overlap.

For example, a length of the second segment may include but is not limited to: 2 ms, 4 ms, 8 ms, 16 ms, 32 ms, 64 ms, 128 ms, 256 ms, and the like.

The length of the second segment may be pre-configured by the network device for the first terminal device, or may be configured by the network device for the first terminal device by using indication information. This is not specifically limited in this embodiment of this application.

It should be understood that the first interval may be a maximum interval among intervals between adjacent segments respectively corresponding to the at least one terminal device. To be specific, terminal devices have intervals between adjacent segments respectively corresponding to the terminal devices, and the first interval is a maximum interval among the intervals between the adjacent segments respectively corresponding to the terminal devices.

The at least one terminal device is at least one terminal device that multiplexes a same resource, and the at least one terminal device includes the first terminal device.

In some embodiments, if the at least one terminal device includes only the first terminal device, the first interval is an interval between adjacent segments corresponding to the first terminal device.

It should be further understood that the interval is a length that needs to be punctured on the second segment, that is, a length of data that needs to be discarded on the second segment.

In this embodiment of this application, the first interval is set to the maximum interval among the intervals between the adjacent segments respectively corresponding to terminal devices. In this way, a terminal device with a small interval may perform data transmission with reference to a puncturing manner of a terminal device with a large interval, so that terminal devices with different segment intervals can also multiplex a resource, thereby avoiding a case in which only terminal devices with a same segment interval can multiplex a resource.

A length of the interval between adjacent segments corresponding to each terminal device may include but is not limited to: one symbol, one slot, two slots, and the like. Specifically, the length of the interval may be pre-configured by the network device for each terminal device, or may be configured by the network device for each terminal device by using indication information. This is not specifically limited in this embodiment of this application.

In this embodiment of this application, there may be a plurality of types of the partial resource of the second segment. This is not specifically limited in this application. For example, the network device may send first indication information to the first terminal device, and the first indication information may indicate a type of the partial resource of the second segment to the first terminal device.

The following describes several possible types of the partial resource of the second segment.

In a possible implementation, one type of the partial resource of the second segment is that the partial resource of the second segment does not include a first interval located at a head of the second segment and do not include a first interval located at a tail of the second segment, where the at least one first segment is numbered with an odd number, and the at least one second segment is numbered with an even number.

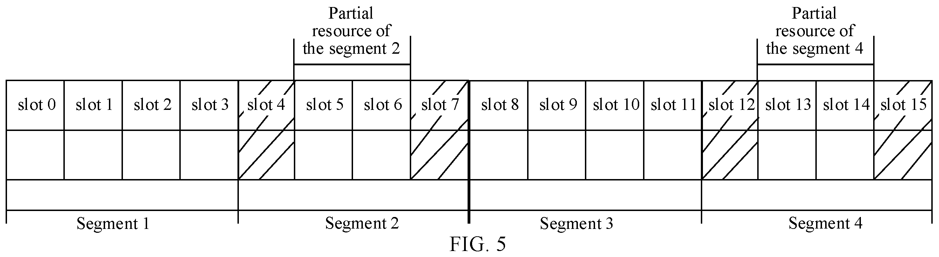

For example, as shown in FIG. 5, an example in which a time domain resource is divided into four segments, and a length of each segment is four slots is used. Numbers of a segment 1 (a slot 0 to a slot 3) and a segment 3 (a slot 8 to a slot 11) are odd numbers. Therefore, the segment 1 (the slot 0 to the slot 3) and the segment 3 (the slot 8 to the slot 11) may respectively correspond to the first segment. Numbers of a segment 2 (a slot 4 to a slot 7) and a segment 4 (a slot 12 to a slot 15) are even numbers. Therefore, the segment 2 (the slot 4 to the slot 7) and the segment 4 (the slot 12 to the slot 15) may respectively correspond to the second segment. A partial resource of the segment 2 includes the slot 5 and the slot 6 in the segment 2. To be specific, the partial resource of the segment 2 does not include the slot 4 located at a head of the segment 2 and the slot 7 located at a tail of the segment 2. A partial resource of the segment 4 includes the slot 13 and the slot 14 in the segment 4. To be specific, the partial resource of the segment 4 does not include the slot 12 located at a head of the segment 4 and the slot 15 located at a tail of the segment 4.

In another possible implementation, one type of the partial resource of the second segment is that the partial resource of the second segment does not include a first interval located at a head of the second segment and do not include a first interval located at a tail of the second segment, where the at least one first segment is numbered with an even number, and the at least one second segment is numbered with an odd number.

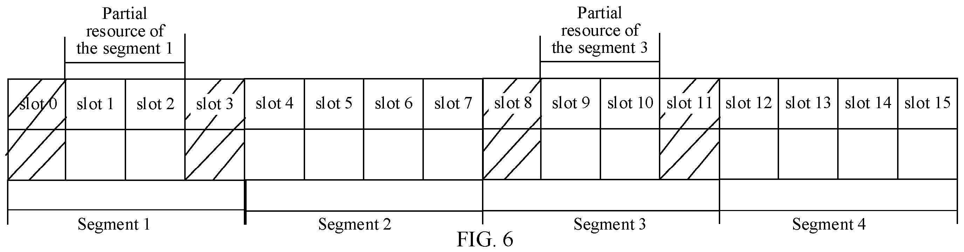

For example, as shown in FIG. 6, an example in which a time domain resource is divided into four segments, and a length of each segment is four slots is used. Numbers of a segment 2 (a slot 4 to a slot 7) and a segment 4 (a slot 12 to a slot 15) are even numbers. Therefore, the segment 2 (the slot 4 to the slot 7) and the segment 4 (the slot 12 to the slot 15) may respectively correspond to the at least one first segment. Numbers of a segment 1 (a slot 0 to a slot 3) and a segment 3 (a slot 8 to a slot 11) are odd numbers. Therefore, the segment 1 (the slot 0 to the slot 3) and the segment 3 (the slot 8 to the slot 11) may respectively correspond to the second segment. A partial resource of the segment 1 includes the slot 1 and the slot 2 in the segment 1. To be specific, the partial resource of the segment 1 does not include the slot 0 located at a head of the segment 1 and the slot 4 located at a tail of the segment 1. A partial resource of the segment 3 includes the slot 9 and the slot 10 in the segment 3. To be specific, the partial resource of the segment 3 does not include the slot 8 located at a head of the segment 3 and the slot 11 located at a tail of the segment 3.

Optionally, in some embodiments, a head of a 1^{st} segment of the time domain resource does not need to be punctured. FIG. 6 is used as an example. The segment 1 belongs to the first segment. Because the segment 1 is a 1^{st} segment of the time domain resource, a partial resource of the segment 1 may include the slot 0 to the slot 2.

In another possible implementation, the partial resource of the second segment does not include the first interval located at the head of the second segment, the at least one first segment is a 1^{st} segment of the time domain resource, and the at least one second segment is at least one segment after the 1^{st} segment.

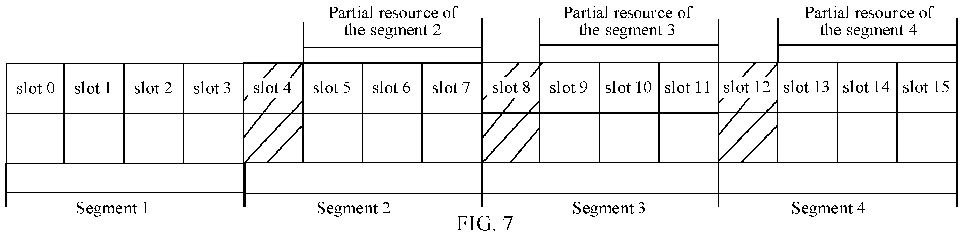

For example, as shown in FIG. 7, an example in which a time domain resource is divided into four segments, and a length of each segment is four slots is used. A segment 1 (a slot 0 to a slot 3) is a 1^{st} segment of the time domain resource. Therefore, the segment 1 corresponds to the first segment. A segment 2 (a slot 4 to a slot 7) to a segment 4 (a slot 12 to a slot 15) are at least one segment after the segment 1. Therefore, the segment 2 (the slot 4 to the slot 7) to the segment 4 (the slot 12 to the slot 15) respectively correspond to the second segment. A partial resource of the segment 2 includes the slot 5 to the slot 7 in the segment 2, that is, the partial resource of the segment 2 does not include the slot 4 located at a head of the segment 2. A partial resource of the segment 3 includes the slot 9 to the slot 11 in the segment 3, that is, the partial resource of the segment 3 does not include the slot 8 located at a head of the segment 3. A partial resource of the segment 4 includes the slot 13 to the slot 15 in the segment 4, that is, the partial resource of the segment 4 does not include the slot 12 located at a head of the segment 4.

In another possible implementation, the partial resource of the second segment does not include the first interval located at the tail of the second segment, the at least one first segment is a last segment of the time domain resource, and the at least one second segment is at least one segment before the last segment.

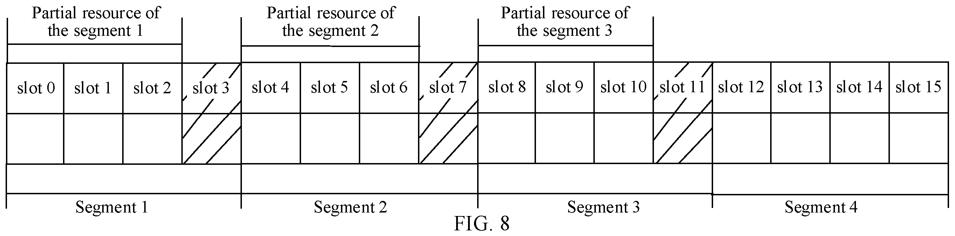

For example, as shown in FIG. 8, an example in which a time domain resource is divided into four segments, and a length of each segment is four slots is used. A segment 4 (a slot 12 to a slot 15) is a last segment of the time domain resource. Therefore, the segment 4 corresponds to the first segment. A segment 1 (a slot 0 to a slot 3) to a segment 3 (a slot 8 to a slot 11) are at least one segment before the segment 4. Therefore, the segment 1 (the slot 0 to the slot 3) to the segment 3 (the slot 8 to the slot 11) respectively correspond to the second segment. A partial resource of the segment 1 includes the slot 0 to the slot 3 in the segment 1, that is, the partial resource of the segment 1 does not include the slot 3 located at a tail of the segment 1. A partial resource of the segment 2 includes the slot 4 to the slot 6 in the segment 2, that is, the partial resource of the segment 2 does not include the slot 5 located at a tail of the segment 2. A partial resource of the segment 3 includes the slot 8 to the slot 10 in the segment 3, that is, the partial resource of the segment 3 does not include the slot 11 located at a tail of the segment 3.

In another possible implementation, the type of the partial resource of the second segment may be selected based on a quantity of repetitions of the data sent by the first terminal device.

It should be understood that, in an NTN system, because there is a large path propagation loss and transmit power of a satellite is limited, a link budget of the terminal device is poor. Therefore, to ensure correct demodulation of data, the terminal device usually needs to perform a large quantity of repetitions on the data when sending the data to the network device.

In an example, when the quantity of repetitions of the data sent by the first terminal device is less than a first threshold, the partial resource of the second segment does not include the first interval located at the head or the tail of the second segment. To be specific, when the first interval is large and the quantity of repetitions of the data sent by the first terminal device is small, to avoid a performance loss caused by a loss of excessive data by the first terminal device, in the data sent by the first terminal device, only data at the first interval at the head of the second segment may be discarded, or data at the first interval at the tail of the second segment may be discarded. Therefore, the partial resource of the second segment may not include the first interval at the head or the tail of the second segment. For details, refer to FIG. 7 or FIG. 8. Details are not described herein again.

Optionally, in some embodiments, when the first interval includes at least two slots, if the quantity of repetitions of the data sent by the first terminal device is less than the first threshold, the partial resource of the second segment does not include the first interval located at the head or the tail of the second segment.

In another example, when the first interval includes at least two slots, if the quantity of repetitions of the data sent by the first terminal device is greater than a first threshold, the partial resource of the second segment does not include the first intervals located at the head and the tail of the second segment. To be specific, when the first interval is large and the quantity of repetitions of the data sent by the first terminal device is large, even if the first terminal device discards the data at the first intervals at the head and the tail of the second segment, performance is not affected. Therefore, the partial resource of the second segment may not include the first intervals at the head and the tail of the second segment. For details, refer to FIG. 6 or FIG. 7. Details are not described herein again.

Optionally, in some embodiments, when the first interval includes at least two slots, if the quantity of repetitions of the data sent by the terminal device is greater than the first threshold, the partial resource of the second segment does not include the first intervals located at the head and the tail of the second segment.

The second data transmitted on the partial resource of the second segment may include data on which OCC encoding is not performed and/or data on which OCC encoding is performed. The following describes in detail several possible implementations.

In a possible implementation, the second data is data on which OCC encoding is not performed. In other words, only the data of the first terminal device is transmitted on the partial resource of the second segment, and another terminal device does not multiplex the partial resource of the second segment for data transmission.

In another possible implementation, the second data includes data on which OCC encoding is performed. The following describes different types of OCC encoding on the second data by using examples.

In an example, the second data includes data obtained by performing OCC encoding on all or part of data to be transmitted on the partial resource of the second segment. In other words, OCC encoding may be performed, based on a quantity of terminal devices that can perform multiplexing on the partial resource of the second segment, on the all or part of the data, of the terminal devices that perform multiplexing, to be transmitted on the partial resource of the second segment, and data obtained by performing OCC encoding of the terminal devices is transmitted by using the partial resource of the second segment.

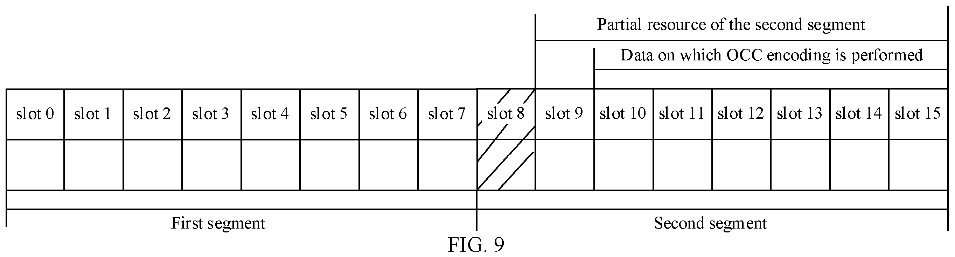

For example, as shown in FIG. 9, an example in which a segment length is eight slots, a first interval between segments is one slot, and a partial resource of a second segment does not include a first interval at a head of the second segment is used. In the partial resource (a slot 9 to a slot 15) of the second segment, it may be determined that a maximum OCC length supported is 3. In other words, a maximum quantity of terminal devices that can perform multiplexing on the partial resource (the slot 9 to the slot 15) of the second segment is 3. Assuming that if data of three terminal devices is transmitted on the partial resource (the slot 9 to the slot 15) of the second segment, following content may be respectively transmitted on the slot 10 to the slot 15 in the partial resource of the second segment: the data to be transmitted by a first terminal device on the slot 10 to the slot 15 multiplied by an OCC sequence whose index is 0, the data to be transmitted by a second terminal device on the slot 10 to the slot 15 multiplied by an OCC sequence whose index is 1, and the data to be transmitted by a third terminal device on the slot 10 to the slot 15 multiplied by an OCC sequence whose index is 2. In this case, for the slot 9 in the partial resource of the second segment, data transmitted on the slot is the data that is to be transmitted by the first terminal device on the slot 9 and on which OCC encoding is not performed. In other words, data of a single terminal device (for example, the first terminal device) is transmitted on the slot 9, and another terminal device (for example, the second terminal device or the third terminal device) does not multiplex the slot 9 in the partial resource of the second segment for data transmission.

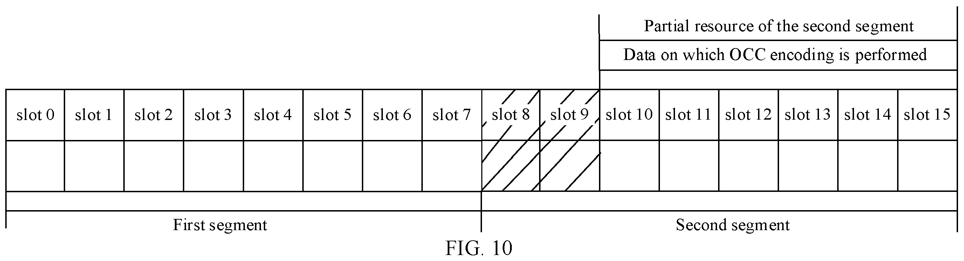

For another example, as shown in FIG. 10, an example in which a segment length is eight slots, a first interval between segments is two slots, and a partial resource of a second segment does not include a first interval at a head of the second segment is used. In the partial resource (a slot 10 to a slot 15) of the second segment, it may be determined that a maximum OCC length supported is 3. In other words, a maximum quantity of terminal devices that can perform multiplexing on the partial resource (the slot 10 to the slot 15) of the second segment is 3. Assuming that if data of three terminal devices is transmitted on the partial resource (the slot 10 to the slot 15) of the second segment, following content may be respectively transmitted on the slot 10 to the slot 15 in the partial resource of the second segment: the data to be transmitted by a first terminal device on the slot 10 to the slot 15 multiplied by an OCC sequence whose index is 0, the data to be transmitted by a second terminal device on the slot 10 to the slot 15 multiplied by an OCC sequence whose index is 1, and the data to be transmitted by a third terminal device on the slot 10 to the slot 15 multiplied by an OCC sequence whose index is 2. For a specific implementation process of performing OCC encoding on the data based on the OCC sequences, refer to the manner of performing OCC encoding on the data in the first segment in FIG. 4. Details are not described herein again.

In the foregoing technical solution, OCC coding may be performed on each segment, that is, data of a plurality of terminal devices may be transmitted on each segment, thereby increasing system capacity in a segmentation scenario.

In another example, the second data is part of third data to be transmitted on the partial resource of the second segment, and the third data is data obtained by performing OCC encoding on data to be transmitted on the second segment. In other words, OCC encoding may be performed, based on a quantity of terminal devices that can perform multiplexing on the second segment, on data to be transmitted on the second segment of the terminal devices that perform multiplexing, to obtain OCC-encoded data. The second data transmitted on the partial resource of the second segment is data that is of the OCC-encoded data and that is to be transmitted on the partial resource of the second segment.

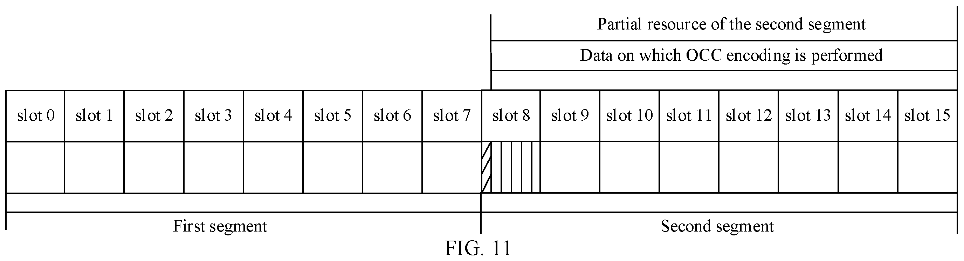

For example, as shown in FIG. 11, an example in which a segment length is eight slots, a first interval between segments is one symbol, and a partial resource of a second segment does not include a first interval at a head of the second segment is used. In the second segment (a slot 8 to a slot 15), it may be determined that a maximum OCC length supported is 4. In other words, a maximum quantity of terminal devices that can perform multiplexing on the second segment (the slot 8 to the slot 15) is 4. The first terminal device may perform, based on a corresponding OCC sequence, OCC encoding on data to be transmitted by the first terminal device on the second segment (the slot 8 to the slot 15), to obtain encoded data. Data transmitted by the first terminal device on a partial resource (the slot 8 to the slot 15 other than a 1^{st} symbol in the slot 8) of the second segment does not include data that is transmitted on the 1^{st} symbol in the slot 8 and that is in the encoded data. To be specific, the data transmitted by the first terminal device on the partial resource of the second segment is encoded data to be transmitted on the slot 8 to the slot 15 other than the data to be transmitted on the 1^{st} symbol in the slot 8.

In the foregoing technical solution, in a scenario in which one symbol (the first interval is one symbol) is discarded, because an amount of discarded data is small, there is no great impact on OCC orthogonality. Therefore, OCC encoding may be performed on the partial resource of the second segment as much as possible, and one symbol is discarded after OCC encoding is completed to perform timing advance adjustment.

It should be noted that, FIG. 9 to FIG. 11 are described by using an example in which the partial resource of the second segment does not include the first interval at the head of the second segment, and the descriptions are also applicable to other types of the partial resource of the second segment. For specific different types of the partial resource of the second segment, refer to the descriptions in FIG. 5 to FIG. 8. Details are not described herein again.

In this embodiment of this application, the network device may further indicate a type of OCC encoding of the second data to the first terminal device by using second indication information. Specifically, the network device may send the second indication information to the first terminal device, where the second indication information may indicate the type of OCC encoding of the second data to the first terminal device.

Step 330: The network device receives the first data sent by the first terminal device, and decodes the first data based on the OCC sequence.

In this embodiment of this application, after receiving the first data sent by the first terminal device, the network device determines, based on a segment configuration (including a segment length and an interval between segments) corresponding to the first terminal device, that the first data is data respectively transmitted by the first terminal device on the at least one first segment of the time domain resource.

After receiving the first data respectively transmitted by the first terminal device on the at least one first segment, the network device may perform OCC decoding on the first data based on the OCC sequence.

It should be understood that a process of performing OCC decoding on the first data corresponds to an OCC encoding process. For details, refer to the foregoing OCC encoding process. Details are not described herein again.

In this embodiment of this application, because a plurality of terminal devices may multiplex the resource on the at least one first segment, the network device further respectively receives, on the at least one first segment, first data sent by another terminal device, and performs OCC decoding on the first data sent by the another terminal device based on a corresponding OCC sequence.

Step 340: The network device receives the second data sent by the second terminal device, and determines, based on the type of OCC encoding of the second data, whether to perform OCC decoding on the second data.

In this embodiment of this application, after receiving the second data sent by the first terminal device, the network device determines, based on the segment configuration (including the segment length, the interval between segments, and the type of the partial resource of the second segment) corresponding to the first terminal device, that the first data is data respectively transmitted by the first terminal device on the at least one second segment of the time domain resource.

After receiving the second data respectively transmitted by the first terminal device on the at least one second segment, the network device may determine, based on the type of OCC encoding of the second data, whether to perform OCC decoding on the second data. In an example, assuming that the type of OCC encoding of the second data indicates that the second data is data on which OCC encoding is not performed, the network device does not need to perform OCC decoding on the second data. In another example, assuming that the type of OCC encoding of the second data indicates that the second data includes data on which OCC encoding is performed, the network device may perform OCC decoding on the second data based on a corresponding OCC sequence.

It should be noted that an execution order of steps 310 to 340 in FIG. 3 is not specifically limited in this embodiment of this application. For example, steps 310 and 320 may be performed first, and then steps 330 and 340 are performed, or step 310, step 330, step 320, and step 340 may be performed in sequence.

In the foregoing technical solution, in a segmentation scenario, a quantity of accessed terminal devices is increased in a multi-user resource multiplexing manner, to increase system capacity in the segmentation scenario.

In some embodiments, for a scenario in which gain performance is not high, complexity of the terminal device and the network device may be reduced by not performing multi-user resource multiplexing (not performing OCC encoding). The following lists some possible scenarios in which OCC encoding is not supported.
1. OCC encoding is not supported when a segment length is 2 ms.
2. OCC encoding is not supported in a scenario in which a segment length is excessively small (for example, 2 ms or 4 ms) and an interval between segments is large.
3. OCC encoding is not supported in a scenario in which an interval between segments is large.
4. OCC encoding is not supported in a scenario in which a quantity of repetitions of data is small, for example, the quantity of repetitions is 2 or 4.
5. In a scenario in which a quantity of repetitions of data is 4, OCC encoding may be supported only when an interval between segments is one symbol. If the interval between segments is not one symbol, OCC encoding is not supported.

The foregoing describes the method embodiments in embodiments of this application with reference to the accompanying drawings, and the following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that in the foregoing method embodiments, the method and operations implemented by the terminal device may alternatively be implemented by a component (for example, a chip or a circuit) that may be used in the terminal device, and the method and operations implemented by the network device may alternatively be implemented by a component (for example, a chip or a circuit) that may be used in the network device.

The foregoing mainly describes the solutions provided in embodiments of this application from a perspective of interaction between network elements. It may be understood that, to implement the foregoing functions, each network element like a transmit device or a receive device includes a corresponding hardware structure and/or software module for performing each function. A person skilled in the art may be aware that, units and algorithm steps of the examples described in embodiments disclosed in this specification can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a transmit device or a receive device may be obtained through division based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used. An example in which each functional module is obtained through division based on each corresponding function is used below for description.

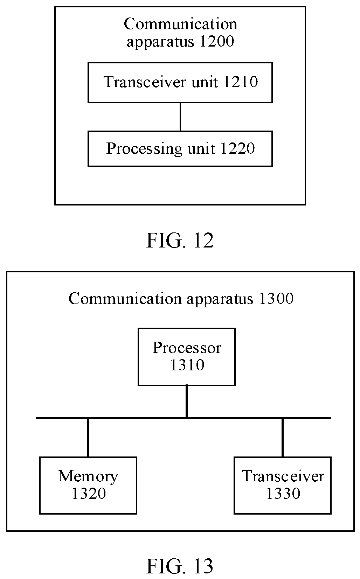

FIG. 12 is a diagram of a structure of a communication apparatus according to an embodiment of this application.

The communication apparatus 1200 includes a transceiver unit 1210 and a processing unit 1220. The transceiver unit 1210 may be configured to implement a corresponding communication function. The processing unit 1220 may be configured to perform data processing.

Optionally, the transceiver unit 1210 may also be referred to as a communication interface or a communication unit, and includes a sending unit and/or a receiving unit. The transceiver unit 1210 may be a transceiver (including a transmitter and/or a receiver), an input/output interface (including an input interface and/or an output interface), a pin, a circuit, or the like. The transceiver unit 1210 may be configured to perform a sending step and/or a receiving step in the foregoing method embodiments.

Optionally, the processing unit 1220 may be a processor (may include one or more processors), a processing circuit having a processor function, or the like, and may be configured to perform a step other than sending and receiving in the foregoing method embodiments.

Optionally, the apparatus 1200 further includes a storage unit. The storage unit may be a memory, an internal storage unit (for example, a register or a cache), an external storage unit (for example, a read-only memory or a random access memory), or the like. The storage unit is configured to store instructions. The processing unit 1220 executes the instructions stored in the storage unit, to cause the communication apparatus to perform the foregoing method.

In a design, the apparatus 1200 may correspond to the first terminal device in the foregoing method embodiments, or may be a component (for example, a chip) of the first terminal device.

The communication apparatus 1200 may implement steps or procedures performed by the first terminal device in the foregoing method embodiments. The transceiver unit 1210 may be configured to perform receiving/sending-related operations of the first terminal device in the foregoing method embodiments. The processing unit 1220 may be configured to perform processing-related operations of the first terminal device in the foregoing method embodiments.

In a possible implementation, the transceiver unit 1210 is configured to respectively transmit first data on at least one first segment of a time domain resource; and the transceiver unit 1210 is further configured to respectively transmit second data on a partial resource of at least one second segment of the time domain resource.

The first data includes data obtained by performing orthogonal cover code OCC encoding; and the partial resource of the second segment does not overlap with the first segment, the partial resource of the second segment does not include a first interval respectively located at a head and/or a tail of the second segment, and the first interval is a maximum interval among intervals between adjacent segments respectively corresponding to at least one terminal device.

Optionally, the transceiver unit 1210 is further configured to receive first indication information, where the first indication information indicates a type of the partial resource of the second segment.

Optionally, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

Optionally, the partial resource of the second segment does not include the first interval located at the head of the second segment, the at least one first segment is a 1^{st} segment of the time domain resource, and the at least one second segment is at least one segment after the 1^{st} segment.

Optionally, the partial resource of the second segment does not include the first interval located at the tail of the second segment, the at least one first segment is a last segment of the time domain resource, and the at least one second segment is at least one segment before the last segment.

Optionally, the first interval includes at least two slots, and when a quantity of repetitions of data is less than a first threshold, the partial resource of the second segment does not include the first interval located at the head or the tail of the second segment.

Optionally, the first interval includes at least two slots, and when a quantity of repetitions of data is greater than a first threshold, the partial resource of the second segment does not include the first interval respectively located at the head and the tail of the second segment.

Optionally, the transceiver unit 1210 is further configured to receive second indication information, where the second indication information indicates a type of OCC encoding of the second data.

Optionally, the second data includes data obtained by performing OCC encoding.

Optionally, the second data is part of third data to be transmitted on the partial resource of the second segment, and the third data is data obtained by performing OCC encoding on data to be transmitted on the second segment.

Optionally, the processing unit 1220 is configured to perform OCC encoding on the data to be transmitted on the second segment to obtain the third data.

Optionally, the second data includes data obtained by performing OCC encoding on all or part of data to be transmitted on the partial resource of the second segment.

Optionally, the processing unit 1220 is configured to perform OCC encoding on the part or all of the data to be transmitted on the second segment to obtain the second data.

It should be understood that a specific process in which the units perform the foregoing corresponding steps has been described in detail in the foregoing method embodiments, and for brevity, details are not described herein again.

In another design, the communication apparatus 1200 may correspond to the network device in the foregoing method embodiments, or a component (for example, a chip) of the network device.

In a possible implementation, the transceiver unit 1210 is configured to receive p pieces of first data; and the transceiver unit 1210 is further configured to receive second data. The p pieces of first data are data respectively transmitted by p terminal devices on at least one first segment of a time domain resource, and each piece of first data includes data obtained by performing OCC encoding; and the second data is data transmitted by at least one terminal device on a partial resource of at least one second segment of the time domain resource, the partial resource of the second segment does not overlap with the first segment, the partial resource of the second segment does not include a first interval respectively located at a head and/or a tail of the second segment, and the first interval is a maximum interval among intervals between adjacent segments respectively corresponding to the at least one terminal device.

Optionally, the processing unit 1220 is configured to respectively perform OCC decoding on the p pieces of first data based on p orthogonal cover code OCC sequences, to obtain the data respectively transmitted by the p terminal devices on the at least one first segment.

Optionally, the processing unit 1220 is further configured to determine, based on a type of OCC encoding of the second data, whether to perform OCC decoding on the second data.

Optionally, the transceiver unit 1210 is further configured to send first indication information to the at least one terminal device, where the first indication information indicates a type of the partial resource of the second segment.

Optionally, the partial resource of the second segment does not include the first interval respectively located at the head and the tail of the second segment, the at least one first segment is numbered with an odd number, and the at least one second segment is numbered with an even number; or the at least one first segment is numbered with an even number, and the at least one second segment is numbered with an odd number.

Optionally, the partial resource of the second segment does not include the first interval located at the head of the second segment, the at least one first segment is a 1^{st} segment of the time domain resource, and the at least one second segment is at least one segment after the 1^{st} segment.

Optionally, the partial resource of the second segment does not include the first interval located at the tail of the second segment, the at least one first segment is a last segment of the time domain resource, and the at least one second segment is at least one segment before the last segment.

Optionally, the transceiver unit 1210 is further configured to send second indication information to the at least one terminal device, where the second indication information indicates the type of OCC encoding of the second data.

Optionally, the second data includes data obtained by performing OCC encoding.

Optionally, the second data is part of third data to be transmitted on the partial resource of the second segment, and the third data is data obtained by performing OCC encoding on data to be transmitted on the second segment.

Optionally, the second data includes data obtained by performing OCC encoding on all or part of data to be transmitted on the partial resource of the second segment.

Optionally, the processing unit 1220 is further configured to perform OCC decoding on the second data based on an OCC sequence, to obtain data respectively transmitted by the at least one terminal device on the at least one second segment.

It should be understood that a specific process in which the units perform the foregoing corresponding steps has been described in detail in the foregoing method embodiments, and for brevity, details are not described herein again.

It should be further understood that the communication apparatus 1200 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the communication apparatus 1200 may be specifically the network device in the foregoing embodiments, and may be configured to perform procedures and/or steps corresponding to the network device in the foregoing method embodiments. To avoid repetition, details are not described herein again.

The communication apparatus 1200 in the foregoing solutions has a function of performing corresponding steps performed by devices (for example, the first terminal device and the network device) in the foregoing method. The function may be implemented by hardware, or may be implemented by hardware executing corresponding software. The hardware or the software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform sending and receiving operations and related processing operations in the method embodiments.

In addition, the transceiver unit 1210 may alternatively be a transceiver circuit (which, for example, may include a receiving circuit and a sending circuit), and the processing unit may be a processing circuit.

It should be noted that the communication apparatus 1200 in FIG. 12 may be the network element or the device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 13 is a diagram of a structure of a communication apparatus 1300 according to an embodiment of this application. The communication apparatus 1300 shown in FIG. 13 includes a processor 1310, a memory 1320, and a transceiver 1330. The processor 1310 is coupled to the memory 1320, and is configured to execute instructions stored in the memory 1320, to control the transceiver 1330 to send a signal and/or receive a signal.

It should be understood that the processor 1310 and the memory 1320 may be integrated into one processing apparatus. The processor 1310 is configured to execute program code stored in the memory 1320, to implement the foregoing functions. During specific implementation, the memory 1320 may alternatively be integrated into the processor 1310, or may be independent of the processor 1310. It should be understood that the processor 1310 may alternatively correspond to each processing unit in the foregoing communication apparatus, and the transceiver 1330 may correspond to each receiving unit and each sending unit in the foregoing communication apparatus.

It should be further understood that the transceiver 1330 may include a receiver (also referred to as a receiver machine) and a transmitter (also referred to as a transmitter machine). The transceiver may further include an antenna, and a quantity of antennas may be one or more. The transceiver may alternatively be a communication interface or an interface circuit.

Specifically, the communication apparatus 1300 may correspond to a device (the first terminal device or the network device) in FIG. 3 according to embodiments of this application. The communication apparatus 1300 may include units of the method performed by the first terminal device in FIG. 3, or units of the method performed by the network device. It should be understood that a specific process in which the units perform the foregoing corresponding steps has been described in detail in the foregoing method embodiments, and for brevity, details are not described herein again.

When the communication apparatus 1300 is a chip, the chip includes an interface unit and a processing unit. The interface unit may be an input/output circuit or a communication interface. The processing unit may be a processor, a microprocessor, or an integrated circuit integrated on the chip.

In an implementation process, the steps in the foregoing method may be implemented by using a hardware integrated logic circuit in the processor, or by using instructions in a form of software. The steps in the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the method, the steps, and the logical block diagrams that are disclosed in embodiments of this application. The general-purpose processor may be a microprocessor, or the processor may be any conventional processor or the like. The steps in the method disclosed with reference to embodiments of this application may be directly performed by a hardware decoding processor, or may be performed by a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

This application further provides a communication system, including a first terminal device and a network device. The first terminal device performs an action of the first terminal device in the foregoing method, and the network device performs an action of the network device.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

A person of ordinary skill in the art may be aware that, units and algorithm steps of the examples described with reference to embodiments disclosed in this specification can be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps in the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement that can be readily figured out by a person skilled in the art within the technical scope disclosed in this application shall fall within the protection scope of this application. Therefore, the protection scope of this application shall be subject to the protection scope of the claims.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated in the figure, both a compute device and an application that runs on the compute device may be components. One or more components may reside within a process and/or an execution thread, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, units and algorithm steps of the examples described with reference to embodiments disclosed in this specification can be implemented by electronic hardware or a combination of computer software and electronic hardware. Whether a function is performed by hardware or software depends on particular applications and design constraints of the technical solutions. A person skilled in the art may use different methods to implement the described functions for each particular application, but it should not be considered that the implementation goes beyond the scope of this application.

## Claims

1. A communication method, comprising:
respectively transmitting first data on at least one first segment of a time domain resource, wherein the first data comprises data obtained by performing orthogonal cover code OCC encoding; and
respectively transmitting second data on a partial resource of at least one second segment of the time domain resource, wherein the partial resource of the second segment does not overlap with the first segment, the partial resource of the second segment does not comprise a first interval respectively located at a head and/or a tail of the second segment, and the first interval is a maximum interval among intervals between adjacent segments respectively corresponding to at least one terminal device.

2. The method according to claim 1, wherein the method further comprises:
receiving first indication information, wherein the first indication information indicates a type of the partial resource of the second segment.

3. The method according to claim 1 or 2, wherein the partial resource of the second segment does not comprise the first interval respectively located at the head and the tail of the second segment,
the at least one first segment is numbered with an odd number, and the at least one second segment is numbered with an even number; or
the at least one first segment is numbered with an even number, and the at least one second segment is numbered with an odd number.

4. The method according to claim 1 or 2, wherein the partial resource of the second segment does not comprise the first interval located at the head of the second segment, the at least one first segment is a 1^{st} segment of the time domain resource, and the at least one second segment is at least one segment after the 1^{st} segment.

5. The method according to claim 1 or 2, wherein the partial resource of the second segment does not comprise the first interval located at the tail of the second segment, the at least one first segment is a last segment of the time domain resource, and the at least one second segment is at least one segment before the last segment.

6. The method according to any one of claims 1 to 5, wherein the first interval comprises at least two slots, and when a quantity of repetitions of data is less than a first threshold, the partial resource of the second segment does not comprise the first interval located at the head or the tail of the second segment.

7. The method according to any one of claims 1 to 5, wherein the first interval comprises at least two slots, and when a quantity of repetitions of data is greater than a first threshold, the partial resource of the second segment does not comprise the first interval respectively located at the head and the tail of the second segment.

8. The method according to any one of claims 1 to 7, wherein the method further comprises:
receiving second indication information, wherein the second indication information indicates a type of OCC encoding of the second data.

9. The method according to any one of claims 1 to 8, wherein the second data comprises data obtained by performing OCC encoding.

10. The method according to claim 9, wherein the second data is part of third data to be transmitted on the partial resource of the second segment, and the third data is data obtained by performing OCC encoding on data to be transmitted on the second segment.

11. The method according to claim 9, wherein the second data comprises data obtained by performing OCC encoding on all or part of data to be transmitted on the partial resource of the second segment.

12. A communication method, comprising:
receiving p pieces of first data, wherein the p pieces of first data are data respectively transmitted by p terminal devices on at least one first segment of a time domain resource, and each piece of first data comprises data obtained by performing OCC encoding; and
receiving second data, wherein the second data is data transmitted by at least one terminal device on a partial resource of at least one second segment of the time domain resource, the partial resource of the second segment does not overlap with the first segment, the partial resource of the second segment does not comprise a first interval respectively located at a head and/or a tail of the second segment, and the first interval is a maximum interval among intervals between adjacent segments respectively corresponding to the at least one terminal device.

13. The method according to claim 12, wherein the method further comprises:
respectively performing OCC decoding on the p pieces of first data based on p orthogonal cover code OCC sequences, to obtain the data respectively transmitted by the p terminal devices on the at least one first segment; and
determining, based on a type of OCC encoding of the second data, whether to perform OCC decoding on the second data.

14. The method according to claim 12 or 13, wherein the method further comprises:
sending first indication information to the at least one terminal device, wherein the first indication information indicates a type of the partial resource of the second segment.

15. The method according to any one of claims 12 to 14, wherein the partial resource of the second segment does not comprise the first interval respectively located at the head and the tail of the second segment,
the at least one first segment is numbered with an odd number, and the at least one second segment is numbered with an even number; or
the at least one first segment is numbered with an even number, and the at least one second segment is numbered with an odd number.

16. The method according to any one of claims 12 to 14, wherein the partial resource of the second segment does not comprise the first interval located at the head of the second segment, the at least one first segment is a 1^{st} segment of the time domain resource, and the at least one second segment is at least one segment after the 1^{st} segment.

17. The method according to any one of claims 12 to 14, wherein the partial resource of the second segment does not comprise the first interval located at the tail of the second segment, the at least one first segment is a last segment of the time domain resource, and the at least one second segment is at least one segment before the last segment.

18. The method according to any one of claims 12 to 17, wherein the method further comprises:
sending second indication information to the at least one terminal device, wherein the second indication information indicates the type of OCC encoding of the second data.

19. The method according to any one of claims 12 to 18, wherein the second data comprises data obtained by performing OCC encoding.

20. The method according to any one of claims 12 to 18, wherein the second data is part of third data to be transmitted on the partial resource of the second segment, and the third data is data obtained by performing OCC encoding on data to be transmitted on the second segment.

21. The method according to any one of claims 12 to 18, wherein the second data comprises data obtained by performing OCC encoding on all or part of data to be transmitted on the partial resource of the second segment.

22. The method according to any one of claims 19 to 21, wherein the determining, based on the type of OCC encoding of the second data, whether to perform OCC decoding on the second data comprises:
performing OCC decoding on the second data based on an OCC sequence, to obtain data respectively transmitted by the at least one terminal device on the at least one second segment.

23. A communication apparatus, wherein the communication apparatus comprises a unit or a module configured to perform the method according to any one of claims 1 to 11.

24. A communication apparatus, wherein the communication apparatus comprises a unit or a module configured to perform the method according to any one of claims 12 to 22.

25. A chip, comprising a processor and a communication interface, wherein the communication interface is configured to: receive data and/or information, and transmit the received data and/or information to the processor; and the processor is configured to process the data and/or information, to perform the method according to any one of claims 1 to 11 or the method according to any one of claims 12 to 22.

26. A computer-readable storage medium, wherein the computer-readable storage medium stores instructions; and when the instructions are run on a computer, the computer is caused to perform the method according to any one of claims 1 to 11, or the computer is caused to perform the method according to any one of claims 12 to 22.

27. A computer program product, wherein the computer-readable storage medium stores instructions; and when the instructions are run on a computer, the computer is caused to perform the method according to any one of claims 1 to 11, or the computer is caused to perform the method according to any one of claims 12 to 22.

28. A communication system, comprising a network device and/or a terminal device, wherein the terminal device is configured to perform the method according to any one of claims 1 to 11, and the network device is configured to perform the method according to any one of claims 12 to 22.
